# EUROPÄISCHE PATENTSCHRIFT

(11) **EP 2 064 097 B1**
(45) Veröffentlichungstag und Bekanntmachung des Hinweises auf die Patenterteilung: **18.05.2011**
(21) Anmeldenummer: 07817497.6
(22) Anmeldetag: 12.09.2007
(51) Int. Cl.: B60S 5/04

(54) **VERFAHREN ZUM AUTOMATISCHEN ERKENNEN EINES FAHRZEUGTYPS ODER EINES REIFENTYPS AUF EINER MESSANLAGE**
METHOD FOR THE AUTOMATIC IDENTIFICATION OF A TYPE OF VEHICLE OR TYPE OF TIRE ON A TEST STAND
PROCÉDÉ POUR L'IDENTIFICATION AUTOMATIQUE D'UN TYPE DE VÉHICULE OU D'UN TYPE DE PNEU SUR UNE INSTALLATION DE MESURE

(30) Priorität: 19.09.2006 DE 102006044587
(43) Veröffentlichungstag der Anmeldung: 03.06.2009
(73) Patentinhaber: Ventech GmbH, 45768 Marl (DE)
(72) Erfinder: PINGEL, Ulrich, 45770 Marl (DE); VIEHL, Ralf, 45770 Marl (DE)
(74) Vertreter: Tönhardt, Marion
(86) Internationale Anmeldenummer: PCT/DE2007/001624
(87) Internationale Veröffentlichungsnummer: WO 2008/034410

(56) Entgegenhaltungen:
- EP-A- 1 327 872
- US-A- 4 493 103
- US-A- 5 260 520
- US-A- 5 396 817
- US-A- 5 753 810
- US-A1- 2003 222 789
- US-A1- 2004 059 503

## Beschreibung

Die Erfindung betrifft ein Verfahren zum automatischen Erkennen eines Fahrzeugtyps auf einer Meßanlage. "Fahrzeugtyp" meint dabei auch den Aufbau eines Fahrzeuges oder kurz den Fahrzeugaufbau.

Die Möglichkeit, Sollvorgaben und Toleranzen vorgeben zu können, ist eine wichtige Voraussetzung für einen automatischen Service für ein Fahrzeug. Hierzu zählt beispielsweise die Vorgabe für den Soll-Reifendruck und die erlaubte Toleranz. Automatische Meßanlagen, beispielsweise für den Reifendruck, sind aus der US-A-5 396 817 oder aus der US-A-5 445 020 bekannt.

Die EP 1 327 827 A2 offenbart eine Vorrichtung zur Bestimmung des Reifeninnendrucks, insbesondere von Fahrzeugreifen, wobei diese Vorrichtung eine Meßeinheit, eine Auswerteelektronik und eine optisch-akustische Anzeigeeinheit aufweist. Es ist vorgesehen, daß die Meßeinheit je Fahrzeugspur angeordnet ist und elektromechanische Mittel mit einem nachgeordneten Signalwandler aufweist. Dabei wird der Reifeninnendruck über die Reifenaufstandsfläche mit Hilfe mathematischer Formeln, technischer Daten von Reifentypen und empirischer Werte von physikalischen Gesetzmäßigkeiten bestimmt, wobei diese in einem Hostcomputer bereitgestellt sind. Über die im Hostcomputer hinterlegten Formeln wird die Reifenaufstandsfläche über die Reifenbreite und Abrollfläche berechnet und graphisch abgeleitet. Daraus kann zuverlässig auf den aktuellen Reifeninnendruck geschlossen werden, wobei die gewonnenen Informationen keine Ergebnisse einer Präzisionsmessung darstellen, sondern lediglich dem Fahrzeugführer ausreichende Hinweise über einen Über-, Unter- oder Normaldruck in den Fahrzeugreifen geben sollen.

Es ist daher die Aufgabe der Erfindung, ein Verfahren zum automatischen Erkennen eines Fahrzeugtyps auf einer Meßanlage zur Verfügung zu stellen, damit auch die Vorgabe für Sollwerte und Toleranzen automatisch erfolgen kann. Diese Aufgabe wird durch ein Verfahren nach Anspruch 1 gelöst.

Vorteilhafte Ausgestaltungen sind Gegenstand der Unteransprüche.

Das erfindungsgemäße Verfahren zum automatischen Erkennen eines Fahrzeugtyps auf einer Meßanlage weist folgende Schritte auf:
a) Bereitstellen vorermittelter, den Fahrzeugtyp kennzeichnender Parameter;
b) Bereitstellen einer Meßanlage, welche eine Vielzahl von Sensoren aufweist;
c) Abfühlen zumindest von Bereichen eines Reifens auf der Meßanlage;
d) Bestimmen mindestens einer Eigenschaft des Fahrzheugs oder des Reifens aus Werten, die mittels zumindest einem Teil der Sensoren abgefühlt worden sind;
e) Vergleichen der im Schritt d) bestimmten Eigenschaften mit den vorermittelten Parametern;
f) Zuweisen des Fahrzeugtyps aufgrund des Ergebnisses aus Schritt e) oder, wenn ein Zuweisen wegen fehlender Übereinstimmung von Eigenschaften mit den Parametern nicht möglich ist, Definieren von Parametern eines neuen Fahrzeugtyps.

Zu bestimmende Eigenschaften können beispielsweise die Spurbreite jeder Achse, der Achsabstand, die Achslast und das Gesamtgewicht des Fahrzeuges sein, aus denen auf den Fahrzeugtyp geschlossen wird. Zu bestimmende Eigenschaften können auch Steifigkeitswerte des Reifens sein, die aus den Kräften der Reifenflanken und der Walkkräfte (Latscheffekte) herrühren, weiter Reifendruck, Reifenlast, Lastverteilung auf die Achsen und dergleichen.

Ist die Zuweisung erfolgt, können Sollwerte und Toleranzwerte, die beispielsweise in einer Datenbank abgelegt sind, den sich ändernden Betriebswerten zugeordnet werden.

Zweckmäßig ist auch, wenn überprüft wird, ob ein abgefühlter oder ermittelter Wert innerhalb eines vorgegebenen Sollwert- oder Toleranzbereiches für den Fahrzeugtyp oder den Reifentyp liegt, und, falls der Wert außerhalb des Sollwert- oder Toleranzbereiches liegt, daß eine Aktion durchgeführt wird, welche den Wert in den Sollwert- oder Toleranzbereich bringt. Auch eine einfache Anzeige des Ergebnisses der Überprüfung ist möglich, zum Beispiel ja/nein, so daß die Entscheidung über eine durchzuführende Aktion dem Benutzer überlassen bleibt.

Es ist vorteilhaft, wenn jedem Parameter eine Wichtung zugeordnet wird, die beim Schritt f) des Zuweisens des Fahrzeugtyps einfließt.

Zweckmäßig ist auch, daß jedem Parameter eine Akzeptanzweite zugeordnet wird, wobei die Akzeptanzweiten für die Parameter jedes Fahrzeugtyps so angepaßt wird, daß die Zuweisung im Schritt f) eindeutig ist.

Die letzten beiden Maßnahmen sind besonders wichtig, wenn das Verfahren einen neuen Fahrzeugtyp "lernen" oder definieren soll. Hierbei fährt ein noch unbekannter Fahrzeugtyp über die Meßeinrichtung. Die ermittelten Fahrzeugtypdaten können dann dem neu anzulegenden Fahrzeug zugeordnet werden. Hierzu sollte immer wieder überprüft werden, ob eine eindeutige Trennung aller Fahrzeugtypen anhand der ermittelten Detaildaten möglich ist oder ob es Kollisionen geben kann. Im letzteren Fall sind entsprechende Maßnamen wie Reduzierung der Akzeptanzweiten oder die Einführung neuer Parameter zu prüfen.

Im folgenden soll die Erfindung anhand der beigefügten Zeichnung näher erläutert werden. Es zeigt:
Figur 1 in einer schematischen Darstellung mögliche Parameter, die bei der Fahrzeugtyperkennung einfließen; und
Figur 2 in Form einer Tabelle ein Beispiel für Akzeptanzweiten von Parametern bei einem Fahrzeugtyp Auflieger 1.

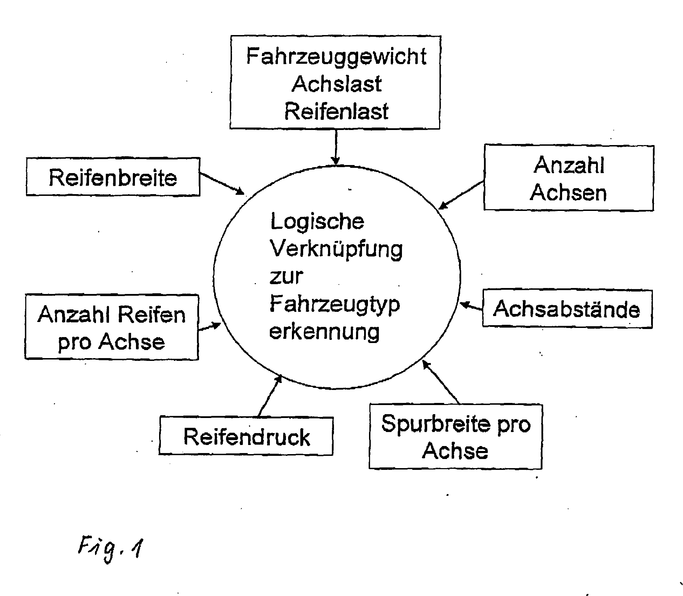

Figur 1 zeigt die Parameter, die in die Fahrzeugtyperkennung eingehen können. Dazu gehört die Anzahl der Achsen sowie die Anzahl der Reifen pro Achse, die Spurbreite pro Achse, die Achsabstände, das Gewicht des Fahrzeugs, die Achslast, die Reifenlast sowie die Reifenbreite. Die Werte für die ermittelten Eigenschaften werden zur Fahrzeugerkennung logisch verknüpft. Die Eigenschaften können gewichtet und in ihrer Wertigkeit variiert werden. Es kann beispielsweise ein intelligentes Netzwerk, beispielsweise ein neuronales Netzwerk, oder ein solches, das auf Fuzzy Logik basiert, verwendet werden, um den Fahrzeugtyp zu erkennen.

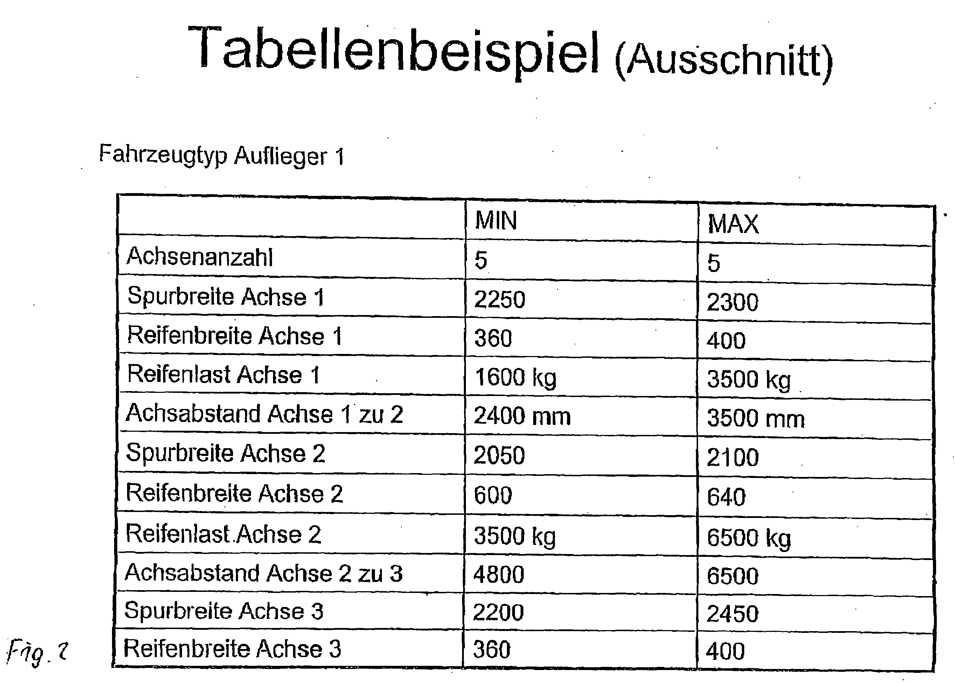

Figur 2 zeigt in einer Tabelle die Akzeptanzweiten, die für wichtige Maße eines beispielhaften Fahrzeugtyps hinterlegt sind.

## Patentansprüche

1. Verfahren zum automatischen Erkennen eines Fahrzeugtyps auf einer Meßanlage, mit den Schritten:
a) Bereitstellen vorermittelter, den Fahrzeugtyp kennzeichnender Parameter;
b) Bereitstellen einer Meßanlage, welche eine Vielzahl von Sensoren aufweist;
c) Abfühlen zumindest von Bereichen eines Reifens auf der Meßanlage;
d) Bestimmen mindestens einer Eigenschaft des Fahrzeuges oder des Reifens aus Werten, die mittels zumindest einem Teil der Sensoren abgefühlt worden sind;
**gekennzeichnet durch**
e) Vergleichen der im Schritt d) bestimmten Eigenschaften mit den vorermittelten Parametern;
f) Zuweisen des Fahrzeugtyps aufgrund des Ergebnisses aus Schritt e) oder, wenn ein Zuweisen wegen fehlender Übereinstimmung von Eigenschaften mit den Parametern nicht möglich ist, Definieren von Parametern eines neuen Fahrzeugtyps.

2. Verfahren nach Anspruch 1, **dadurch gekennzeichnet, daß** mindestens eine der Eigenschaften Reifenbreite, Reifenprofil, Steifigkeit des Reifens, Reifendruck, Reifenlast, Anzahl Reifen pro Achse, Spurbreite wenigstens einer Achse des Fahrzeugs, jeweiliger Achsabstand, aktuelle Achslast, Lastverteilung auf die Achsen und das Gesamtgewicht des Fahrzeuges abgefühlt werden oder aus abgefühlten Werten bestimmt werden.

3. Verfahren nach Anspruch 1 oder 2, **dadurch gekennzeichnet, daß** Fahrzeugtyp Sollwerte und/oder Toleranzwerte für gemessene Betriebswerte des Fahrzeuges zugeordnet werden.

4. Verfahren nach einem der Ansprüche 1 bis 3, **dadurch gekennzeichnet, daß** überprüft wird, ob ein abgefühlter oder ermittelter Wert innerhalb eines vorgegebenen Sollwert- oder Toleranzbereiches liegt, und, falls der Wert außerhalb des Sollwert- oder Toleranzbereiches liegt, daß eine Aktion durchgeführt wird, welche den Wert in den Sollwert- oder Toleranzbereich bringt.

5. Verfahren nach Anspruch 1, **dadurch gekennzeichnet, daß** jedem Parameter eine Wichtung zugeordnet wird, die beim Schritt f) des Zuweisens des Fahrzeugtyps einfließt.

6. Verfahren nach Anspruch 1, **dadurch gekennzeichnet, daß** jedem Parameter eine Akzeptanzweite zugeordnet wird, wobei die Akzeptanzweiten für die Parameter jedes Fahrzeugtyps so angepaßt wird, daß die Zuweisung im Schritt f) eindeutig ist.

## Claims

1. A method for automatic identification of a type of vehicle on a test stand, comprising the steps of:
a) providing predetermined parameters that characterize the type of vehicle;
b) providing a test stand comprising a plurality of sensors;
c) sensing at least areas of a tire on said test stand;
d) determining at least one characteristic of the vehicle or of the tire from values, at least some of which have been sensed by said sensors;
**characterized by**
e) comparing the characteristics determined in step d) with the predetermined parameters;
f) classifying the type of vehicle on basis of the result from step e) or, if a classification is not possible on account of a lack of coherence of characteristics with the parameters, defining parameters of a new type of vehicle.

2. The method of claim 1, **characterized in that** at least one of the characteristics tire width, tire profile, rigidity of the tire, tire pressure, tire load, number of tires per axle, track width of at least one axle of the vehicle, the respective distance between individual axles, current axle load, load distribution over the axles and total weight of the vehicle are sensed or are determined from sensed values.

3. The method of claim 1 or 2, **characterized in that** nominal values and/or tolerances for measured operating parameters of the vehicle are associated with the type of vehicle.

4. The method of any of claims 1 to 3, **characterized in that** a verification is performed to determine whether a sensed or measured value lies within a specified range of nominal values or tolerance, and if the value lies outside the range of nominal values or tolerance, an action is carried out which brings the value into the range of nominal values or tolerance.

5. The method of claim 1, **characterized in that** the weighting is associated with each parameter which is included in step f) of the classification of the type of vehicle.

6. The method of claim 1, **characterized in that** an acceptance range is associated with each parameter, whereby the acceptance ranges for the parameters of each type of vehicle are adjusted so that the classification in step f) is unambiguous.

## Revendications

1. Procédé pour l'identification automatique d'un type de véhicule sur une installation de mesure, comprenant les étapes suivantes :
a) mise à disposition de paramètres prédéterminés, caractérisant le type de véhicule ;
b) mise à disposition d'une installation de mesure qui présente une pluralité de capteurs ;
c) balayage au moins de zones d'un pneu sur l'installation de mesure;
d) détermination d'au moins une propriété du véhicule ou du pneu à partir de valeurs qui ont été balayées au moyen d'au moins une partie des capteurs;
**caractérisé par**
e) comparaison des propriétés déterminées à l'étape d) avec les paramètres prédéterminés ;
f) attribution du type de véhicule sur la base du résultat de l'étape e) ou, si une attribution est impossible en raison de l'absence de concordance de propriétés avec les paramètres, définition de paramètres d'un nouveau type de véhicule.

2. Procédé selon la revendication 1, **caractérisé en ce qu'**au moins l'une des propriétés largeur de pneumatique, sculpture du pneu, rigidité du pneu, pression de gonflage, charge du pneu, nombre de pneus par essieu, largeur de voie d'au moins un essieu du véhicule, entraxe respectif, charge actuelle par essieu, répartition de charge entre les essieux et le poids total du véhicule est obtenue par balayage ou est déterminée à partir de valeurs obtenues par balayage.

3. Procédé selon la revendication 1 ou 2, **caractérisé en ce que** des valeurs de consigne et/ou des valeurs de tolérance pour des valeurs de service mesurées du véhicule sont attribuées au type de véhicule.

4. Procédé selon l'une quelconque des revendications 1 à 3, **caractérisé en ce qu'**on vérifie si une valeur obtenue par balayage ou déterminée se situe dans les limites d'une plage prédéfinie de valeurs de consigne ou d'une plage de tolérance, et, si la valeur se situe en dehors de la plage de valeurs de consigne ou de la plage de tolérance, on effectue une action qui amène la valeur dans la plage de valeurs de consigne ou la plage de tolérance.

5. Procédé selon la revendication 1, **caractérisé en ce qu'**une pondération, qui intervient lors de l'étape f) de l'attribution du type de véhicule, est attribuée à chaque paramètre.

6. Procédé selon la revendication 1, **caractérisé en ce qu'**une marge d'acceptation est attribuée à chaque paramètre, les marges d'acceptation pour les paramètres de chaque type de véhicule étant adaptées de façon que l'attribution à l'étape f) soit claire.
